# EUROPÄISCHE PATENTSCHRIFT

(11) **EP 4 103 461 B1**
(45) Veröffentlichungstag und Bekanntmachung des Hinweises auf die Patenterteilung: **26.07.2023**
(21) Anmeldenummer: 21711384.4
(22) Anmeldetag: 12.02.2021
(51) Int. Cl.: B62K 3/04, B62K 19/12

(54) **FAHRRADRAHMEN**
BICYCLE FRAME
CADRE DE VÉLO

(30) Priorität: 13.02.2020 IT 202000002830
(43) Veröffentlichungstag der Anmeldung: 21.12.2022
(73) Patentinhaber: ETERNUM TECHNOLOGY SRL, 39057 Appiano Sulla Strada Del Vino (BZ) (IT)
(72) Erfinder: PASQUIN, Stefano, 39044 EGNA (BZ) (IT)
(74) Vertreter: Boario, Enrico
(86) Internationale Anmeldenummer: PCT/IT2021/050033
(87) Internationale Veröffentlichungsnummer: WO 2021/161356

(56) Entgegenhaltungen:
- EP-A1- 0 177 646
- CN-A- 108 454 763
- GB-A- 2 164 300

## Beschreibung

### Technisches Gebiet

Die Erfindung betrifft einen Fahrradrahmen gemäß dem Oberbegriff des Patentanspruches 1 .

Ein solcher Fahrradrahmen bildet das Hauptaufbauelement eines Fahrrades, mit dem die anderen typischen Bestandteile des Fahrrades verbunden sind und er stellt eine Alternative zu den Fahrradrahmen dar, die mittels eines Zusammenbaus hergestellt werden, bei welchen die drei o.g. Rahmenabschnitte separat hergestellt werden und danach fest miteinander verbunden, z.B. verschweißt, werden. Es sind zusammengebaute Rahmen aus Stahl, Kohlenstofffasern und Aluminium bekannt. Die Kohlenstofffasern und das Aluminium sind Materialien die teurer und auch schwieriger zu bearbeiten als der Stahl sind, aber sie sind viel leichter.

### Stand der Technik

Um einen Fahrradrahmen zur Verfügung zu stellen, der so stark und strapazierfähig wie die Fahrradrahmen aus Stahl und so leicht wie die Fahrradrahmen aus Kohlenstoff oder Aluminium ist und nicht schwierig herzustellen ist, wurde ein Fahrradrahmen entwickelt, der die in dem Oberbegriff des Patentanspruches 1 angegebenen Merkmale aufweist und in dem Dokument EP 0 177 646 A1 offenbart ist.

Die Benutzung, als grundlegendes Material des Fahrradrahmens, einer Magnesiumlegierung, d.h. eines Materials in dem das Magnesium überwiegend ist, ermöglicht es die vorteilhaften Merkmale des Magnesiums, wie z.B. die Leichtigkeit und die Fähigkeit Schwingungen aufzufangen, optimal auszunutzen und einen leichten, starken und strapazierfähigen Fahrradrahmen zu erhalten. In diesem Zusammenhang wird die bekannte Schwierigkeit des Magnesiums verschweißt zu werden (das Schweißen ist nur ohne Sauerstoff möglich) einfallsreich überwunden indem vorgesehen wird, dass der Fahrradrahmen als monolithisches Einzelstück hergestellt wird, das durch einen Gussverfahren gefertigt wird. Mit anderen Wörtern, um einen Fahrradrahmen herzustellen ist es nicht mehr notwendig zu einem späteren Zeitpunkt die drei typischen Rahmenabschnitte, die ein Fahrradrahmen traditionsgemäß aufweist, fest miteinander zu verbinden, weil die Rahmenabschnitte von Anfang an in demselben Einzelstück vorhanden sind, das alleine den Fahrradrahmen bildet.

Ein solcher Fahrradrahmen weist daher überhaupt keine Schweißstellen auf, was extrem vorteilhaft ist. Die Schweißungen sind nämlich schwierig durchzuführen, sie bilden Schwachstellen bezüglich der mechanischen Festigkeit und verursachen Spannungen in dem Material, die von seinem örtlichen Schwinden während der Kühlung verursacht sind.

Die Tatsache, dass das Magnesium in flüssigem Zustand eine Zähflüssigkeit aufweist, die mit jener des Wassers vergleichbar ist, gewährleistet außerdem, dass das flüssige Material den ganzen in der Gussform vorgesehen Raum optimal ausfüllt (was z.B. im Fall der Benutzung einer Aluminiumlegierung nicht möglich wäre, weil das Aluminium zu zähflüssig ist). Dank der Magnesiumlegierung ist es daher möglich, dass der Fahrradrahmen die geeignetste Form erhält und man erreicht eine konstruktive Qualität von hohem Niveau, die außerdem für alle hergestellten Fahrradrahmen gleichmäßig ist, weil alle mit einer bestimmten Gussform hergestellten Fahrradrahmen gleich sind.

Um den Fahrradrahmen aus der Gussform einfach herauszunehmen, ist es zweckmäßig, dass dort wo der erste Sitz und der zweite Sitz nicht vorhanden sind die Querschnitte des ersten Rahmenabschnittes, des zweiten Rahmenabschnittes und des dritten Rahmenabschnittes offen sind.

All diese offenen Querschnitte sind außerdem auch dünnwandig, was eine Materialersparnis ermöglicht und dazu beiträgt die Herausnahme des Fahrradrahmens aus der Gussform zu vereinfachen.

Im Fall dieses bekannten Fahrradrahmens sind aber diese Querschnitte nicht alle geometrisch gleich und die Tatsache, dass ihre Formen sich derart viel eine von der anderen unterscheiden erfordert eine Gussform die eine komplexe Form aufweist.

### Darstellung der Erfindung

Ausgehend aus diesem Zusammenhang besteht die der vorliegenden Erfindung zugrunde liegende Aufgabe darin, einen Fahrradrahmen der zuvor angegebenen Gattung weiter zu entwickeln, damit das monolithische den Rahmen bildende Einzelstück einfach herstellbar ist und bereits dazu vorbereitet ist mit allen anderen Bestandteilen des Fahrrades, insbesondere auch mit besonderen zusätzlichen Bestandteilen wie einer Batterie oder einem elektrischen Motor, verbunden zu werden, so dass der Rahmen wahlweise sowohl für herkömmliche Fahrräder als auch für Fahrräder mit Trethilfe benutz werden kann. Erfindungsgemäß wird diese Aufgabe gelöst, wenn ein Fahrradrahmen, der die in dem Oberbegriff des Patentanspruches 1 angegebenen Merkmale aufweist, zusätzlich auch die in dem Kennzeichen des Patentanspruches 1 angegebenen Merkmale aufweist.

Dadurch, dass jeder der offenen und dünnwandigen Querschnitte des ersten, des zweiten und des dritten Rahmenabschnittes erfindungsgemäß Kanten und eine einzige offene Seite aufweist, die bezüglich des Fahrradrahmens nach außen zugewandt ist, wobei die C-förmigen oder die U-förmigen Querschnitte z.B. derartig sind, wird der Rahmen gleichmäßiger und für seine Herstellung genügen ein Verfahren und eine Gussform die einfach sind. Die Gussform weist nämlich einen unbeweglichen Mittelteil, mit dem die äußeren Oberflächen der Rahmenabschnitte gebildet werden, die die o.g. Querschnitte aufweisen, und drei bewegliche Teile auf. Diese beweglichen Teile können dem unbeweglichen Mittelteil angenähert werden oder von diesem entfernt werden und durch sie werden die inneren Oberflächen der Rahmenabschnitte gebildet, die die o.g. Querschnitte aufweisen. Jedem der Rahmenabschnitte ist einer dieser drei beweglichen Teile zugeordnet.

Wenn außerdem, wie die Erfindung zusätzlich vorsieht, in montierter Position des Rahmens in dem Fahrrad die offene Seite jedes der o.g. offenen Querschnitte des ersten Rahmenabschnittes zum Hinterrad des Fahrrades zugewandt ist, die offene Seite jedes der o.g. offenen Querschnitte des zweiten Rahmenabschnittes nach oben zugewandt ist und die offene Seite jedes der o.g. offenen Querschnitte des dritten Rahmenabschnittes zum Vorderrad des Fahrrades zugewandt ist, dann erfolgen die Bewegungen der drei beweglichen Teile der Gussform alle in der gleichen Ebene, was die Herstellung des erfindungsgemäßen Fahrradrahmens weiter vereinfacht.

In dem Innenraum des dritten Rahmenabschnittes, desjenigen dessen Querschnitte die zum Vorderrad des Fahrrades zugewandte offene Seite aufweisen, können außerdem in geschützter Weise ein elektrischer Motor und eine Batterie gelagert werden, so dass der erfindungsgemäße Fahrradrahmen auch für Fahrräder mit Trethilfe benutzt werden kann.

Schließlich weist das monolithische den Fahrradrahmen bildende Einzelstück aus einer Magnesiumlegierung eine Mehrzahl von Verbindungslöchern auf, wobei diese und das Einzelstück zeitgleich sind und sie dazu dienen das Einzelstück mit weiteren Bestandteilen des Fahrrades zu verbinden. Mit anderen Wörtern ist das monolithische die Gussform verlassende Einzelstück bereits mit diesen Verbindungslöchern versehen und es sind keine weiteren Bearbeitungen desselben, wie z.B. die Bohrung, notwendig.

### Kurze Beschreibung der Zeichnungen

Weitere Vorteile und Merkmale der Erfindung werden aus der folgenden Beschreibung eines Ausführungsbeispiels des erfindungsgemäßen Fahrradrahmens näher hervorgehen, das anhand der beigelegten Zeichnungen rein beispielhaft aber nicht in einschränkender Weise erläutert wird. In den Zeichnungen zeigen schematisch:
**Fig. 1** eine Seitenansicht eines Fahrrades das einen erfindungsgemäßen Fahrradrahmen aufweist;
**Fig. 2** eine vergrößerte Seitenansicht des Fahrradrahmens des Fahrrades der Fig. 1, alleine;
**Fig. 3** die vergrößerte Querschnittsdarstellung längs der Schnittlinie S1-S1 der Fig. 2;
**Fig. 4** die vergrößerte Querschnittsdarstellung längs der Schnittlinie S2-S2 der Fig. 2;
**Fig. 5** die vergrößerte Querschnittsdarstellung längs der Schnittlinie S3-S3 der Fig. 2;
**Fig. 6** die vergrößerte Querschnittsdarstellung längs der Schnittlinie S4-S4 der Fig. 2;
**Fig. 7** die Rückansicht des Fahrradrahmens der Fig. 2, wobei der Rahmen mit der gleichen Neigung betrachtet wird, mit der er in Fig. 2 dargestellt ist;
**Fig. 8** die Draufansicht des Fahrradrahmens der Fig. 2; und
**Fig. 9** die Unteransicht des Fahrradrahmens der Fig. 2.

### Bester Weg zur Ausführung der Erfindung

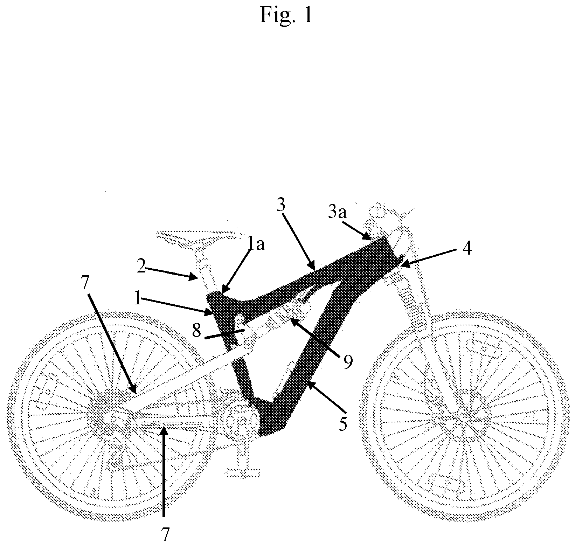

In Figur 1 ist der erfindungsgemäße Fahrradrahmen in montierter Position in einem möglichen Ausführungsbeispiel eines Fahrrades dargestellt und, wie aus dieser Figur hervorgeht, in der der Fahrradrahmen hervorgehoben worden ist, umfasst dieser einen ersten Rahmenabschnitt 1, in dem ein erster Sitz 1a vorhanden ist, der geeignet ist das den Fahrradsattel tragende Rohr 2 aufzunehmen und einen zweiten mit dem ersten Rahmenabschnitt 1 verbundenen Rahmenabschnitt 3.

Der dargestellte Fahrradrahmen umfasst ferner auch einen dritten Rahmenabschnitt 5, der den ersten 1 und den zweiten Rahmenabschnitt 3 miteinander verbindet.

Es ist außerdem vorgesehen, dass in dem Bereich in dem der zweite 3 und der dritte Rahmenabschnitt 5 miteinander verbunden sind ein zweiter Sitz 3a vorhanden ist, der geeignet ist den Anschlusskörper 4 drehbar aufzunehmen, der die Fahrradlenkstange und die Fahrradgabel verbindet.

Ein solcher Fahrradrahmen weist erfindungsgemäß eine dreieckige Form auf und bildet die tragende Hauptstruktur des Fahrrades. Mit ihm werden in bekannter Weise die anderen Bestandteile des Fahrrades verbunden, wie z.B. der Sattel, die Lenkstange, die Schwinge, die mit dem Hinterrad verbunden ist, und die Gabel, die mit dem Vorderrad verbunden ist. Abhängig vom Fahrradmodell können dann andere Bestandteile vorgesehen sein, wie z.B. die Stoßdämpfer für die Gabel oder für die Schwinge.

Wie man in Fig. 1 graphisch versucht hat darzustellen, in der der erfindungsgemäße Fahrradrahmen hervorgehoben wurde, besteht der Fahrradrahmen aus einem einzigen Einzelstück, das aus einer Magnesiumlegierung ist und durch einen Gussverfahren, oder bevorzugt durch einen Druckgussverfahren, gefertigt wird.

Eine mögliche und auch bevorzugte Magnesiumlegierung ist z.B. die bekannte Magnesiumlegierung die AZ91D benannt ist. Es handelt sich um eine Legierung, die Magnesium (ungefähr 90%), Aluminium (ungefähr 9%) und dann Zink und Mangan, die das restliche 1% bilden, enthält.

Um einen solchen Fahrradrahmen zu fertigen, kann eine Druckgussinsel benutz werden, d.h. eine bekannte Maschine, derer Guss- bzw. Druckgussform zweckmäßigerweise vorbereitet wurde, damit das Stück das hergestellt wird, d.h. der Fahrradrahmen, die gewünschte Form besitzt. Die Druckgussinsel wird mit festen Barren aus einer Magnesiumlegierung beschickt, die dann innerhalb der Druckgussinsel bearbeitet werden, d.h. sie werden wahlweise dem Gussverfahren oder dem Druckgussverfahren ausgesetzt.

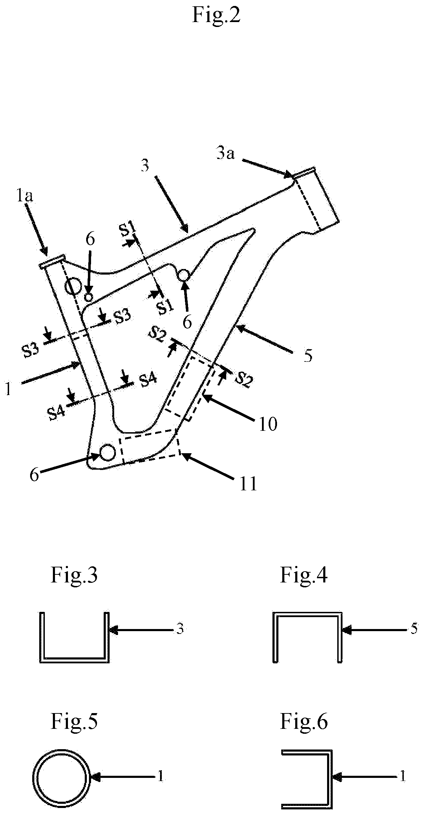

Um so viel Material wie möglich zu sparen und die Kosten zu reduzieren ist es zweckmäßig, dass der Fahrradrahmen keine vollen Querschnitte aufweist. Der Guss- oder der Druckgussverfahren ermöglicht es aber nicht - mit Ausnahme von kürzen Endabschnitten, die mit Hilfe von Kolben erhalten werden, die in die Guss- bzw. Druckgussform hineingesetzt und dann am Ende der Kühlung des Materials entfernt werden - dass lange Rohrabschnitte hergestellt werden. Um dem abzuhelfen und zugleich das Material zu reduzieren, das für die Herstellung des Fahrradrahmens benutzt wird, ist der Querschnitt des Fahrradrahmens offen überall dort wo dies möglich ist. Dort wo der erste Sitz 1a nicht vorhanden ist sind daher die Querschnitte des ersten Rahmenabschnittes 1 offen und dort wo der zweite Sitz 3a nicht vorhanden ist sind daher die Querschnitte des zweiten Rahmenabschnittes 3 und die Querschnitte des dritten Rahmenabschnittes 5 offen (man siehe die Fig. 6, die den Schnitt längs der Schnittlinie S4-S4 darstellt, die Fig. 3 die den Schnitt längs der Schnittlinie S1-S1 darstellt und die Fig. 4 die den Schnitt längs der Schnittlinie S2-S2 darstellt).

All diese offenen Querschnitte sind insbesondere auch dünnwandig.

Wie außerdem aus den Figuren hervorgeht, weist jeder der offenen und dünnwandigen Querschnitte des ersten 1, des zweiten 3 und des dritten Rahmenabschnittes 5 Kanten und eine einzige offene Seite auf, die bezüglich des Fahrradrahmens nach außen zugewandt ist, wie z.B. aus den Fig. 3, 4 und 6 hervorgeht, in denen Querschnitte dargestellt sind, die die Form eines U, eines umgekehrten U und eines gedrehten U aufweisen.

Mit anderen Wörtern, wie auch aus der Gesamtbetrachtung der Figuren hervorgeht, weisen die Rahmenabschnitte 1, 3 und 5 Querschnitte auf, derer Form derart ist, dass ihre Konkavität bezüglich des Fahrradrahmens nach außen zugewandt ist, weil eine solche Anordnung die Herausnahme des Fahrradrahmens aus der Guss- bzw. Druckgussform weiter vereinfacht.

In montierter Position des Rahmens in dem Fahrrad ist die offene Seite jedes der offenen Querschnitte des ersten Rahmenabschnittes 1 zum Hinterrad des Fahrrades zugewandt, die offene Seite jedes der offenen Querschnitte des zweiten Rahmenabschnittes 3 nach oben zugewandt und die offene Seite jedes der offenen Querschnitte des dritten Rahmenabschnittes 5 zum Vorderrad des Fahrrades zugewandt. Das monolithische den Fahrradrahmen bildende Einzelstück aus einer Magnesiumlegierung weist außerdem eine Mehrzahl von Verbindungslöchern 6 auf. Diese Verbindungslöcher 6 und das Einzelstück sind zeitgleich, d.h. sie werden während des Druckgussverfahren gebildet, und sie dienen dazu das Einzelstück mit weiteren Bestandteilen des Fahrrades zu verbinden.

Wie aus der Betrachtung der zwei Figuren 1 und 2 hervorgeht, ist z.B. ein erster Verbindungsloch 6, der in dem Verbindungsbereich zwischen dem ersten 1 und dem dritten Rahmenabschnitt 5 vorgesehen ist, dazu bestimmt, einen ersten Arm einer Hinterradschwinge 7 schwenkbar mit dem Rahmen zu verbinden und ein zweiter im ersten Rahmenabschnitt 1 vorgesehener Verbindungsloch 6 ist dazu bestimmt mit dem Rahmen ein Ende eines Schwinghebels 8 schwenkbar zu verbinden, dessen anderes Ende sowohl mit einem zweiten Arm der Hinterradschwinge 7 als auch mit einem Ende eines Stoßdämpfers 9 verbunden ist. Letzterer 9 ist ferner an dem anderen Ende mit einem weiteren Verbindungsloch 6 verbunden, der auch in dem ersten Rahmenabschnitt 1 vorgesehen ist.

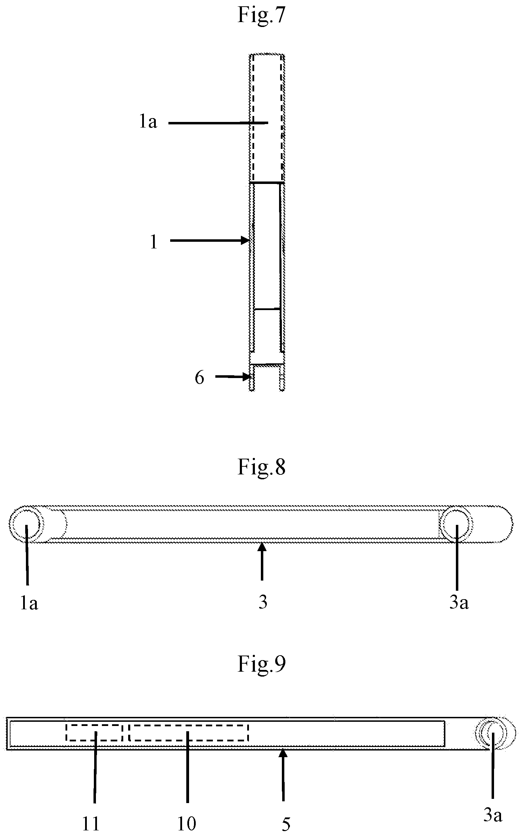

Wenn man für die Querschnitte eine symmetrische und gleichmäßige Form wählt, wie z.B. im Fall des in den Figuren dargestellten Ausführungsbeispiels eine Form die an einen stilisierten U erinnert, man siehe die Fig. 3, kann man den von den zwei Wänden des U begrenzten Innenraum benutzten, um darin im Fall eines sogenannten Fahrrades mit Trethilfe z.B. eine Batterie 10 und einen elektrischen Motor 11 anzuordnen, wie man mit der Strichlinie in den Fig. 2 und 9 angedeutet hat.

Das Teil des ersten Rahmenabschnittes 1 das den ersten Sitz 1a bildet, in dem das den Sattel tragende Rohr eingesetzt ist, und der zweite Sitz 3a, in dem drehbar der Anschlusskörper 4 eingesetzt ist, der die Fahrradlenkstange und die Fahrradgabel verbindet, sind stattdessen rohrförmige Abschnitte (man siehe z.B. die Fig. 5, die den Schnitt längs der Schnittlinie S3-S3 darstellt, und die Fig. 7 und 8), weil ihre Länge derart ist, dass es möglich ist sie mit den zuvor beschriebenen Kolben herzustellen.

## Patentansprüche

1. Fahrradrahmen, der aus einem monolithischen dreieckigen Einzelstück aus einer Magnesiumlegierung besteht und durch einen Gussverfahren gefertigt wird, umfassend:
einen ersten Rahmenabschnitt (1), in dem ein erster Sitz (1a) vorhanden ist, der geeignet ist das den Fahrradsattel tragende Rohr (2) aufzunehmen;
einen zweiten mit dem ersten Rahmenabschnitt (1) verbundenen Rahmenabschnitt (3); und
einen dritten Rahmenabschnitt (5), der den ersten (1) und den zweiten Rahmenabschnitt (3) miteinander verbindet, wobei zusätzlich vorgesehen ist, **dass** in dem Bereich in dem der zweite (3) und der dritte Rahmenabschnitt (5) miteinander verbunden sind ein zweiter Sitz (3a) vorhanden ist, der geeignet ist einen Anschlusskörper (4) drehbar aufzunehmen, der die Fahrradlenkstange und die Fahrradgabel verbindet, **dass** dort wo der erste Sitz (1a) nicht vorhanden ist die Querschnitte des ersten Rahmenabschnittes (1) offen und dünnwandig sind, und **dass** dort wo der zweite Sitz (3a) nicht vorhanden ist die Querschnitte des zweiten Rahmenabschnittes (3) und die Querschnitte des dritten Rahmenabschnittes (5) offen und dünnwandig sind **dadurch gekennzeichnet dass** jeder der besagten offenen und dünnwandigen Querschnitte des ersten (1), des zweiten (3) und des dritten Rahmenabschnittes (5) Kanten und eine einzige offene Seite aufweist, die bezüglich des Fahrradrahmens nach außen zugewandt ist.

2. Fahrradrahmen nach Anspruch 1 **dadurch gekennzeichnet, dass** in montierter Position des Rahmens in dem Fahrrad die offene Seite jedes der besagten offenen Querschnitte des ersten Rahmenabschnittes (1) zum Hinterrad des Fahrrades zugewandt ist, die offene Seite jedes der besagten offenen Querschnitte des zweiten Rahmenabschnittes (3) nach oben zugewandt ist und die offene Seite jedes der besagten offenen Querschnitte des dritten Rahmenabschnittes (5) zum Vorderrad des Fahrrades zugewandt ist.

3. Fahrradrahmen nach einem der vorhergehenden Ansprüche **dadurch gekennzeichnet, dass** besagtes monolithisches den Fahrradrahmen bildendes Einzelstück aus einer Magnesiumlegierung eine Mehrzahl von Verbindungslöchern (6) aufweist, wobei diese und das Einzelstück zeitgleich sind und sie dazu dienen das Einzelstück mit weiteren Bestandteilen des Fahrrades zu verbinden.

4. Fahrradrahmen nach einem der vorhergehenden Ansprüche, **dadurch gekennzeichnet, dass** er durch einen Druckgussverfahren gefertigt wird.

## Claims

1. Bicycle frame, which consists of a monolithic triangular single piece made from a magnesium alloy and is manufactured by casting, comprising:
a first frame portion (1), in which a first seat (1a), which is suitable for accommodating the tube (2) supporting the bicycle saddle, is present;
a second frame portion (3), which is connected to the first frame portion (1); and
a third frame portion (5), which connects the first (1) and the second (3) frame portions to one another, wherein provision is additionally made **for** a second seat (3a), which is suitable for accommodating in a rotatable manner a connection body (4) that connects the bicycle handlebars and the bicycle fork, to be present in the region in which the second (3) and the third (5) frame portions are connected to one another, **for** the cross sections of the first frame portion (1) to be open and thin-walled where the first seat (1a) is not present, and **for** the cross sections of the second frame portion (3) and the cross sections of the third frame portion (5) to be open and thin-walled where the second seat (3a) is not present, **characterized in that** each of said open and thin-walled cross sections of the first (1), the second (3) and the third (5) frame portions has edges and a single open side, which faces outwards with respect to the bicycle frame.

2. Bicycle frame according to Claim 1, **characterized in that**, when the frame is in the mounted position in the bicycle, the open side of each of said open cross sections of the first frame portion (1) faces the rear wheel of the bicycle, the open side of each of said open cross sections of the second frame portion (3) faces upwards, and the open side of each of said open cross sections of the third frame portion (5) faces the front wheel of the bicycle.

3. Bicycle frame according to either of the preceding claims, **characterized in that** said monolithic single piece, which forms the bicycle frame and is made from a magnesium alloy, has a plurality of connecting holes (6), wherein these are formed at the same time as the single piece and are used to connect the single piece to other components of the bicycle.

4. Bicycle frame according to one of the preceding claims, **characterized in that** it is manufactured by die casting.

## Revendications

1. Cadre de vélo qui est composé d'une pièce monolithique triangulaire individuelle en un alliage de magnésium et qui est produit à l'aide d'un procédé de coulée, comprenant :
une première section de cadre (1) dans laquelle un premier siège (1a) est prévu, qui est appropriée pour recevoir le tube (2) qui supporte la selle de vélo ;
une deuxième section de cadre (3) reliée à la première section de cadre (1) ; et
une troisième section de cadre (5) reliant entre elles la première (1) et la deuxième section de cadre (3), dans lequel il est en outre prévu **que** dans la région dans laquelle la deuxième (3) et la troisième section de cadre (5) sont reliées l'une à l'autre soit pourvue d'un second siège (3a) qui est adapté pour recevoir de manière rotative un corps de liaison (4) reliant le guidon de vélo et la fourche de vélo, **que** les sections transversales de la première section de cadre (1) soient ouvertes et à paroi mince à l'écart de la position du premier siège (1a), et **que** les sections transversales de la deuxième section de cadre (3) et les sections transversales de la troisième section de cadre (5) soient ouvertes et à paroi mince à l'écart de la position du second siège (3a), **caractérisé en ce que** chacune des sections transversales ouvertes et à paroi mince susmentionnées des première (1), deuxième (3) et troisième sections de cadre (5) présente des bords et un côté ouvert individuel qui est tourné vers l'extérieur par rapport au cadre de vélo.

2. Cadre de vélo selon la revendication 1, **caractérisé en ce que,** dans la position montée du cadre dans la vélo, le côté ouvert de chacune desdites sections transversales ouvertes de la première section de cadre (1) est orienté vers la roue arrière du vélo, le côté ouvert de chacune desdites sections transversales ouvertes de la deuxième section de cadre (3) est orienté vers le haut et le côté ouvert de chacune desdites sections transversales ouvertes de la troisième section de cadre (5) est orienté vers la roue avant du vélo.

3. Cadre de vélo selon l'une quelconque des revendications précédentes, **caractérisé en ce que** ladite pièce monolithique individuelle formant le cadre de vélo constituée d'un alliage de magnésium présente une pluralité de trous de liaison (6), ceux-ci et la pièce individuelle étant concomitants et servant à relier la pièce individuelle à d'autres composants du vélo.

4. Cadre de vélo selon l'une quelconque des revendications précédentes, **caractérisé en ce qu'**il est fabriqué par un procédé de moulage sous pression.
